# EUROPÄISCHE PATENTSCHRIFT

(11) **EP 1 609 563 B1**
(45) Veröffentlichungstag und Bekanntmachung des Hinweises auf die Patenterteilung: **22.08.2007**
(21) Anmeldenummer: 05013430.3
(22) Anmeldetag: 22.06.2005
(51) Int. Cl.: B23Q 1/54

(54) **Bewegungsvorrichtung mit gelenkigen Stäben für eine Plattform mit sechs Freiheitsgraden**
Positioning device with rods mounted on joints for a platform with six degrees of freedom
Dispositif de positionnement avec des bras articulés pour une plateforme à six degrés de liberté

(30) Priorität: 24.06.2004 DE 102004030659
(43) Veröffentlichungstag der Anmeldung: 28.12.2005
(73) Patentinhaber: Deutsches Zentrum für Luft- und Raumfahrt e.V., 51147 Köln (DE); Aul, Peter, 70567 Stuttgart (DE); Altenburger, Ruprecht, 70178 Stuttgart (DE)
(72) Erfinder: Bergmann, Andreas, Dr., 38165 Lehre (DE); Altenburger, Ruprecht, 70178 Stuttgart (DE); Aul, Peter, 70567 Stuttgart (DE)
(74) Vertreter: Lins, Edgar

(56) Entgegenhaltungen:
- EP-A- 1 234 632
- US-A- 6 099 217
- US-A1- 2004 028 516

## Beschreibung

Die Erfindung betrifft eine Bewegungsvorrichtung mit einer Stewart-Plattform, bei der eine bewegliche Plattform mit Plattformgelenken gegenüber einer Basis mit mindestens sechs Stäben gelenkig verbunden ist, die Stäbe mit Basisgelenken basisseitig gelenkig auf Schlitten ruhen, die Schlitten auf zur Basis feststehenden Schienen in Längsrichtung der jeweiligen Schiene verschiebbar sind, wobei sich die Schienen parallel zueinander erstrecken, jeder Schlitten einen eigenen Antrieb hat, und die Schlitten voneinander unabhängig verfahrbar sind.

Insbesondere betrifft die Erfindung eine Bewegungsvorrichtung zur Positionierung zur Bewegung eines Windkanalmodells in den drei translatorischen und drei rotatorischen Freiheitsgraden relativ zur freien Anströmung eines Windkanals. Das Modell wird dabei in Bauch- oder Rückenstielanordnung von einem Stiel so gehalten, dass sich die Bewegungsvorrichtung außerhalb der Windkanalmessstrecke befindet. Dadurch wird gewährleistet, dass möglichst wenig Störung in die Messstrecke eingebracht wird. Aufgrund der über den Hebelarm wirkenden aerodynamischen Lasten und der Massenkräfte muss die Bewegungsvorrichtung hinsichtlich einer größtmöglichen Steifigkeit bei gleichzeitiger Begrenzung der maximalen Antriebskraft optimiert werden.

In vielen herkömmlichen Windkanälen wird die Aufhängung eines Modells in Heckstiel-, Bauchstiel- oder Rückenstielanordnung so realisiert, dass der Stiel zum Tragen des Modells aus der Messstrecke herausgeführt wird und von seriell außerhalb der Strömung angeordneten Bewegungsmechanismen gehalten wird.

Die Modellaufhängung kann ebenfalls an Drähten erfolgen, die wiederum von einem außerhalb der Messstrecke befindlichen Mechanismus in der Art eines Marionettenantriebs gehalten werden. Die Lageänderung und die Stabilisierung im Raum erfolgt dann durch Zug an den Drähten gegen die Gravitationskraft. Solche Mechanismen sind nicht seriell.

Weiterhin sind zur Realisierung periodischer Bewegungen im Luftstrom zur Bestimmung dynamischer Derivativa Stielaufhängungen bekannt, die seriell so aufgebaut sind, dass je stets eine Achse jeweils eine weitere trägt. Bei drei Freiheitsgrad-Bewegungen führt dies bereits zu einer Reihenschaltung von groß und schwer bauenden Achsvorrichtungen für die Bewegungen des Nickens, Gierens und Rollens beispielsweise von Flugzeugmodellen. Durch die serielle, voneinander unabhängige Achsanordnung der Mechanismen muss eine Achse stets die Last aller nachgeordneten Achsen aufnehmen und entsprechend dimensioniert sein. Volumen und Gewicht steigt dadurch von Achse zu Achse und die Bewegungsflexibilität und Dynamik ist stark eingeschränkt. Zudem wird die Genauigkeit serieller Anordnungen durch das Fehlerfortpflanzungsgesetz durch die Genauigkeiten der Einzelachsen bestimmt und ist damit stets schlechter als bei der jeweiligen Einzelachse. Zudem ist jede einzelne Komponente individuell konstruiert, so dass der Aufwand für Fertigung und Montage relativ hoch ist.

Aus der EP 0 868 255 B1 ist eine solche gattungsgemäße Bewegungsvorrichtung für eine Werkzeugmaschine oder einen Manipulator bekannt. Die zu bewegende Plattform kann im Raum bis zu drei translatorischen und drei rotatorischen Freiheitsgraden relativ zu einer Basis bewegt werden.
Bei mindestens vier unabhängig voneinander auf parallelen Schienen verfahrbaren Schlitten, kann trotz der eindimensionalen Vorzugsrichtung die bewegliche Plattform nicht nur linear verfahren, sondern auch verkippt werden. Eine der Schienen soll dabei genau zwei Schlitten tragen.

Derartige Stewart-Plattformen haben den Vorteil einer großen Steifigkeit bei geringen zu bewegenden Massen.

In der DE 198 40 886 C2 ist eine Bewegungsvorrichtung mit Parallelstruktur offenbart, bei der fünf Führungsgelenkketten mit rotatorischen Motoren angetrieben werden. Ein sechster Stab ist davon unabhängig als Arbeitsspindel vorgesehen.

In der EP 1 234 632 A1 ist eine Werkzeugmaschine mit vier Freiheitsgraden beschrieben, bei der Stäbe in Parallelogrammen auf Schlitten getragen werden. Es sind zwei Schienen vorgesehen, wobei eine Schiene einen Schlitten und die andere Schiene drei Schlitten trägt. Eine Überkreuzung von Stäben führt zur Bindung von Freiheitsgraden.

In der EP 0 868 255 B1 ist eine Bewegungsvorrichtung mit drei Schienen vorgesehen, um einen Körper in drei bis sechs Freiheitsgraden zu bewegen.

In der DE 101 51 631 B4 ist eine Bewegungsvorrichtung mit vier Schienen vorgesehen, die jeweils zwei Schlitten tragen. Die Schlitten sind parallel zueinander ausgerichtet und stehen sich räumlich gegenüber, so dass diese ein Rechteck aufspannen.

Das Problem bei derartigen Stewart-Plattformen ist es, eine in nahezu allen Bewegungssituationen konstante Steifigkeit bereitzustellen.

Aufgabe der Erfindung ist es daher, eine entsprechend verbesserte Bewegungsvorrichtung zu schaffen.

Die Aufgabe wird mit der gattungsgemäßen Bewegungsvorrichtung dadurch gelöst, dass genau zwei Schienen vorgesehen sind und jede Schiene mindestens drei Schlitten trägt und mindestens sechs Stäbe vorgesehen sind, wobei jeder Schlitten mindestens einen der Stäbe trägt.

Es hat sich gezeigt, dass bei der Reduktion der Bewegungsvorrichtung auf zwei Schienen, die jeweils mindestens drei Schlitten tragen, die Steifigkeit des Systems verbessert werden kann und eine dynamische Bewegung in allen sechs Freiheitsgraden möglich ist. Dies gilt insbesondere für eine auf den Tool-Center-Point oberhalb eines Stiels auf der beweglichen Plattform ausgelegten Kinematik. Diese ist überraschenderweise trotz der Konzentration von mindestens drei Schlitten auf jeweils eine von zwei Schienen nicht eingeschränkt.

Durch die Parallelschaltung der Schlittenantriebe ist die Fehlerfortpflanzung ebenfalls erheblich verringert, wobei sich Fehler in den einzelnen Schlittenantrieben im Idealfall sogar kompensieren können.

Es müssen nur zwei Linearführungen zusammen mit einem Wegmesssystem jeweils für sich auf Gradheit und Ebenheit ausgerichtet werden. Dabei können die Linearführungen zueinander windschief stehen. Alle übrigen Komponenten werden ohne besondere Genauigkeitsanforderungen montiert, weil die darauf entstehenden möglichen Abweichungen mit Kalibrierverfahren ausgeglichen werden können. Dies führt zu einem erheblich reduzierten Fertigungs- und Montageaufwand.

Besonders vorteilhaft ist es, wenn sich mindestens zwei einer gemeinsamen Schiene zugeordnete Stäbe räumlich überkreuzen, d. h. in der Vorderansicht und Seitenansicht der Plattform mindestens ein Kreuzungspunkt zwischen den sich überkreuzenden Stäben sichtbar ist. So können z. B. die auf einem hinteren Schlitten auf einer Schiene getragenen hinteren Stäbe an der Plattform vor dem Anlenkpunkt der von dem mittleren Schienen getragenen mittleren Stäbe angelenkt werden. Das heißt, dass für jede Schiene sich die mittleren und hinteren Stäbe überkreuzen. Auf diese Weise kann der erforderliche Einbauraum bei gleichem Bewegungsraum und mindestens gleicher Steifigkeit minimiert werden.

Besonders vorteilhaft ist es, wenn die Schienen um einen Neigungswinkel α von zum Beispiel 26° zur Basisebene zueinander geneigt sind. Hierdurch kann die Steifigkeit und das dynamische Bewegungsverhalten weiter verbessert werden.

Weiterhin ist es vorteilhaft, wenn die Basisgelenke zum Tragen der Stäbe auf den Schlitten für eine gemeinsame Schiene zur Längsachse der Schiene seitlich mit unterschiedlichem Abstand versetzt angeordnet sind. Durch die Befestigung der Gelenke an unterschiedlichen Positionen an dem Schlitten kann die Kinematik weiter verbessert werden.

Weiterhin ist es vorteilhaft, wenn mindestens ein Plattformgelenk der einer gemeinsamen Schiene zugeordneten Stäbe auf einer unterschiedlichen Ebene zu den anderen Plattformgelenken an der beweglichen Plattform angeordnet ist. Diese Anordnung kann Vorteile hinsichtlich der auf den Tool-Center-Point oberhalb der beweglichen Plattform bezogenen Kinematik und Steifigkeit haben.

Die Stäbe sind vorzugsweise starr und können in einer besonderen Ausführungsform auch längenveränderbar sein. Hierdurch werden weitere Bewegungsmöglichkeiten bereitgestellt, allerdings unter Reduktion der Steifigkeit.

Die Plattform ist vorzugsweise zum Tragen eines Modells für einen Windkanal vorgesehen, kann aber auch für Werkzeugmaschinen o. ä. genutzt werden.

Die Erfindung wird nachfolgend anhand der beigefügten Zeichnungen mit einem Ausführungsbeispiel näher erläutert. Es zeigen:
- Figur 1 -: perspektivische Ansicht einer Bewegungsvorrichtung mit zwei Schienen, die jeweils drei Schlitten tragen;
- Figur 2 -: Frontansicht der Bewegungsvorrichtung aus Figur 1;
- Figur 3 -: Seitenansicht der Bewegungsvorrichtung aus Figur 1;
- Figur 4 -: Draufsicht auf die Bewegungsvorrichtung aus Figur 1.

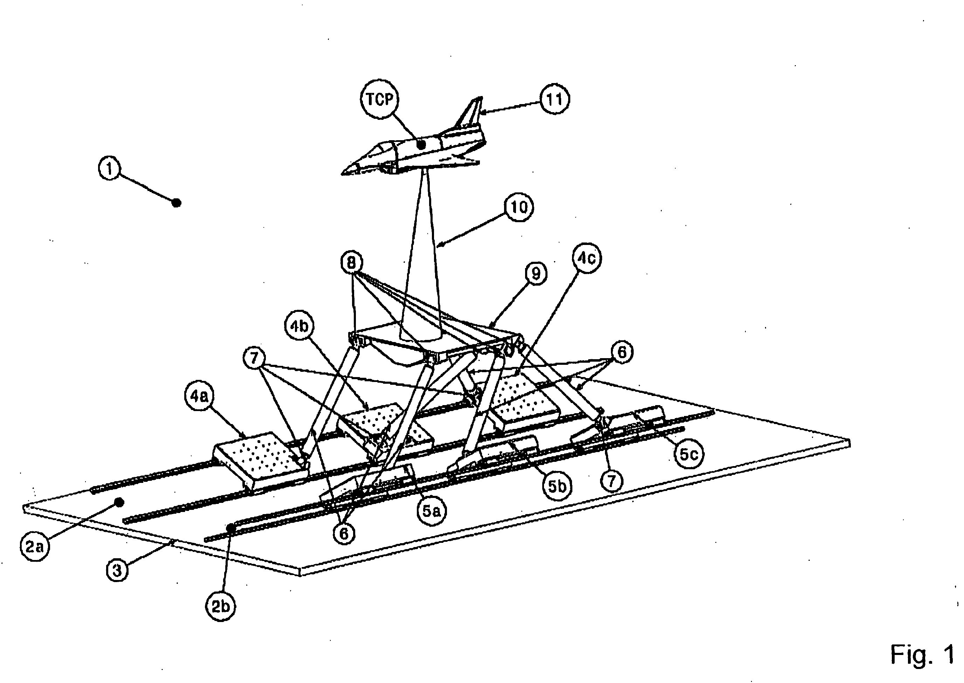

Die Figur 1 lässt eine Bewegungsvorrichtung 1 mit genau zwei parallel zueinander verlaufenden Schienen 2a, 2b erkennen, die fest mit einer ebenen Basis 3 verbunden sind. Jede der Schienen 2a, 2b trägt jeweils in Längsrichtung der jeweiligen Schiene 2a, 2b verschieblich angeordnete Schlitten 4a, 4b, 4c und 5a, 5b, 5c.

Pro Schlitten 4a, 4b, 4c und 5a, 5b, 5c ist jeweils ein Stab 6 mit einem Basisgelenk 7 drehgelenkig verbunden. An dem anderen Ende sind die Stäbe 6 jeweils mit Plattformgelenken 8 drehgelenkig mit einer beweglichen Plattform 9 verbunden.

Durch die Verschiebung der einzelnen Schlitten 4a, 4b, 4c und 5a, 5b, 5c in Längsrichtung der Schienen 2a, 2b kann die Plattform 9 in allen Freiheitsgraden dynamisch bewegt werden.

In der dargestellten Ausführungsform der Bewegungsvorrichtung 1 trägt die Plattform 9 einen Stiel 10, auf der beispielsweise ein Flugzeugmodell 11 für Windkanaluntersuchungen befestigt ist.

Die Kinematik der Bewegungsvorrichtung ist dabei auf einen Tool-Center-Point TCP am oberen Ende des Stiels 10 ausgelegt. Der Schwerpunkt des Flugzeugmodells 11 bleibt dabei im Wesentlichen unverändert. Die Schwenkwinkel in den drei Raumrichtungen X, Y und Z lassen die Simulation nahezu beliebiger Lenkmanöver des Flugzeugmodells 11 zu. Dabei sind sehr dynamische Flugmanöver mit Beschleunigungen von bis zum 2,5 G und mehr möglich, die sehr genau gesteuert werden können. Die Steifigkeit der Bewegungsvorrichtung 1 ist dabei relativ konstant und die erste Eigenfrequenz relativ hoch.

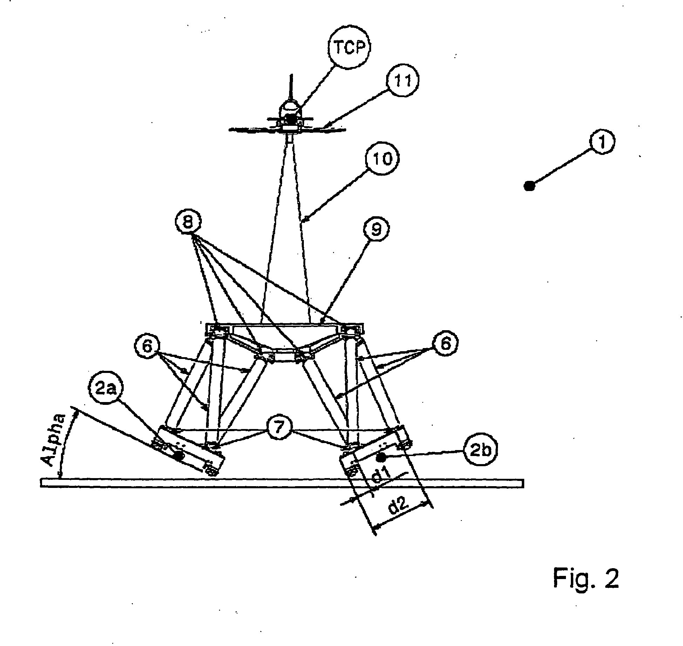

Die Figur 2 lässt eine Vorderansicht der Bewegungsvorrichtung 1 aus der Figur 1 erkennen. Es wird insbesondere deutlich, dass die Schlitten 2a, 2b zueinander um einen Neigungswinkel α zur Basisebene 3 geneigt sind.

Weiterhin ist deutlich, dass die Basisgelenke 7 der Schlitten 4a, 4b, 4c, bzw. 5a, 5b, 5c einer gemeinsamen Schiene 2a oder 2b zur Längsachse der jeweiligen Schiene 2a, 2b seitlich mit unterschiedlichem Abstand d₁, d₂ versetzt angeordnet sind.

Weiterhin ist erkennbar, dass die mittleren Plattformgelenke 8b auf einer tieferen Ebene der Plattform 9 als die vorderen und hinteren Plattformgelenke 8a und 8c angeordnet sind.

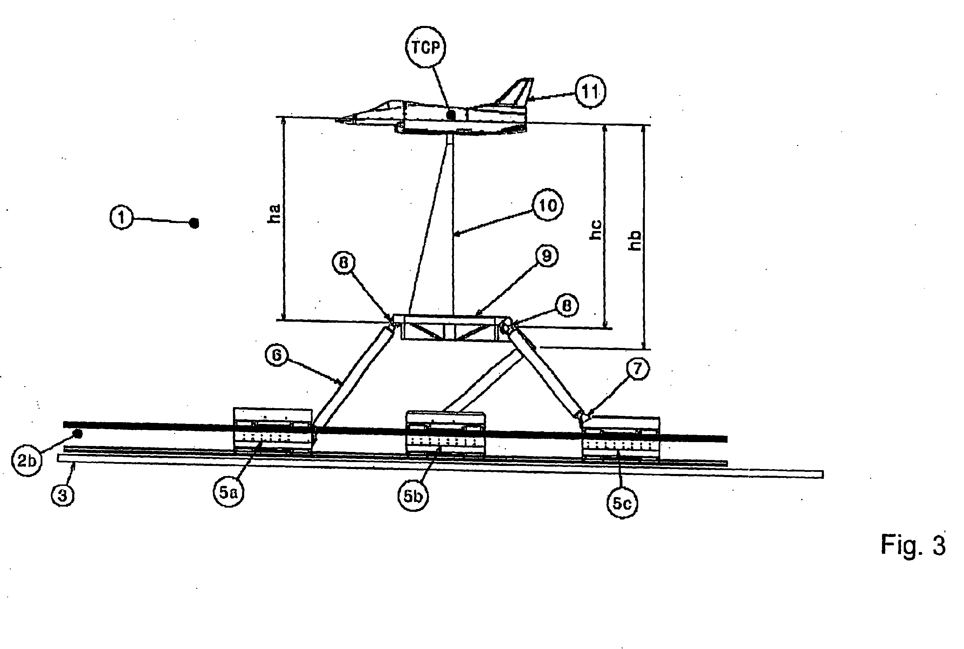

Die Figur 3 lässt eine Seitenansicht der Bewegungsvorrichtung 1 aus der Figur 1 erkennen. Es wird nochmals deutlich, dass die mittleren Plattformgelenke 8b in Bezug auf die vorderen und hinteren Plattformgelenke 8a und 8c bezogen auf die Ebene der Plattform 9 oder bezogen auf eine senkrecht auf de Stiel 10 stehenden und durch den Tool-Center-Point TCP verlaufenden Ebene tiefer liegen. Der Abstand zu dieser Ebene ist in der Figur 3 für die vorderen Plattformgelenke mit hₐ, für die mittleren Plattformgelenke 8b mit h_{b} und für die hinteren Plattformgelenke 8c mit h_{c} bezeichnet. Dabei gilt hₐ<h_{c}<h_{b}.

Weiterhin ist erkennbar, dass die beiden hinteren Stäbe 6 nach vorne und die vorderen und mittleren Stäbe 6 nach hinten gerichtet sind. Das Plattformgelenk 8b der mittleren Stäbe 6 liegt wie oben erläutert bezogen auf die Ebene durch den Tool-Center-Point oder die Plattform 9 am tiefsten.

Die Plattformgelenke 8b für die mittleren Stäbe 6 liegen dabei in Längsrichtung der Schienen 2 gesehen hinter den diesbezüglich vorgelagerten Plattformgelenken 8c der hinteren Beine 6.

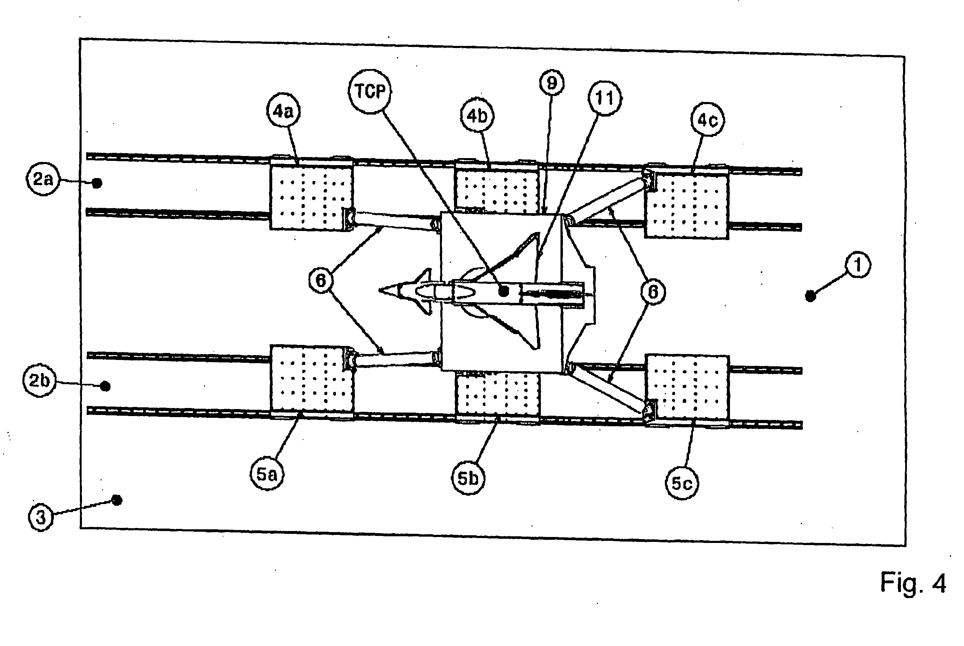

Die Figur 4 lässt eine Draufsicht auf die oben beschriebene Bewegungsvorrichtung erkennen.

Es wird wiederum deutlich, dass genau zwei Schienen 2a, 2b vorgesehen sind, die parallel zueinander verlaufen und jeweils drei Schlitten 4a, 4b und 4c und 5a, 5b, 5c tragen.

Weiterhin wird deutlich, dass die Plattformgelenke 8b der mittleren Stäbe 6 in Längsrichtung der Schlitten 2a, 2b von links nach rechts gesehen hinter den Plattformgelenken 8c der hinteren Stäbe 6 liegen.

## Patentansprüche

1. Bewegungsvorrichtung (1) mit einer Stewart-Plattform, bei der eine in sechs Freiheitsgraden bewegliche Plattform (9) mit Plattformgelenken (8) gegenüber einer Basis (3) mit Stäben (6) gelenkig verbunden ist, die Stäbe (6) mit Basisgelenken (7) basisseitig gelenkig auf Schlitten (4, 5) ruhen, die Schlitten (4, 5) auf zur Basis feststehenden Schienen (2a, 2b) in Längsrichtung der jeweiligen Schiene (2a, 2b) verschiebbar sind, wobei sich die Schienen (2a, 2b) parallel zueinander erstrecken, jeder Schlitten (4, 5) einen eigenen Antrieb hat, und die Schlitten (4, 5) voneinander unabhängig verfahrbar sind, **dadurch gekennzeichnet, dass** genau zwei Schienen (2a, 2b) vorgesehen sind, jede Schiene (2a, 2b) mindestens drei Schlitten (4, 5) trägt und mindestens sechs Stäbe (6) vorgesehen sind, wobei jeder Schlitten (4, 5) mindestens einen der Stäbe (6) trägt.

2. Bewegungsvorrichtung (1) nach Anspruch 1, **dadurch gekennzeichnet, dass**, sich mindestens zwei einer gemeinsamen Schiene (2a, 2b) zugeordnete Stäbe (6) räumlich gesehen überkreuzen.

3. Bewegungsvorrichtung (1) nach einem der vorhergehenden Ansprüche, **dadurch gekennzeichnet, dass** die Schienen (2a, 2b) um einen Neigungswinkel α zur Basisebene zueinander geneigt sind.

4. Bewegungsvorrichtung (1) nach einem der vorhergehenden Ansprüche, **dadurch gekennzeichnet, dass** die Basisgelenke (7) zum Tragen der Stäbe (6) auf den Schlitten (4, 5) für eine gemeinsame Schiene (2a, 2b) zur Längsachse der Schiene (2a, 2b) seitlich mit unterschiedlichem Abstand versetzt angeordnet sind.

5. Bewegungs vorrichtung (1) nach einem der vorhergehenden Ansprüche, **dadurch gekennzeichnet, dass** mindestens ein Plattformgelenk (8) der einer gemeinsamen Schiene (2a, 2b) zugeordneten Stäbe (6) auf einer unterschiedlichen Ebene zu den anderen Plattformgelenken (8) an der beweglichen Plattform (9) angeordnet ist.

6. Bewegungsvorrichtung (1) nach einem der vorhergehenden Ansprüche, **dadurch gekennzeichnet, dass** Stäbe (6) zusätzlich längenveränderbar sind.

7. Bewegungsvorrichtung (1) nach einem der vorhergehenden Ansprüche, **dadurch gekennzeichnet, dass** genau sechs Stäbe (6) vorgesehen sind:

8. Bewegungsvorrichtung (1) nach einem der vorhergehenden Ansprüche, **dadurch gekennzeichnet, dass** die Plattform (9) zum Tragen eines Modells (11) für einen Windkanal vorgesehen ist.

9. Bewegungsvorrichtung (1) nach einem der vorhergehenden Ansprüche 1 bis 8, **dadurch gekennzeichnet, dass** die Plattform (9) für eine Werkzeugmaschine vorgesehen ist.

## Claims

1. A movement device (1) having a Stewart platform, in which a platform (9) that can move with six degrees of freedom and has platform joints (8) is connected in an articulated manner by rods (6) to a base (3), the rods (6) have base joints (7) and at the base rest in an articulated manner on carriages (4, 5), the carriages (4, 5) can be displaced on rails (2a, 2b) that are fixed to the base, in the longitudinal direction of the respective rail (2a, 2b), the rails (2a, 2b) extend parallel to one another, each carriage (4, 5) has a dedicated drive and the carriages (4, 5) can be moved independently of one another, **characterized in, that** exactly two rails (2a, 2b) are provided, each rail (2a, 2b) supports at least three carriages (4, 5), and at least six rods (6) are provided, each carriage (4, 5) supporting at least one of the rods (6).

2. The movement device (1) as claimed in claim 1, **characterized in, that** at least two rods (6) assigned to a common rail (2a, 2b) cross, as viewed three-dimensionally.

3. The movement device (1) as claimed in one of the preceding claims, **characterized in, that** the rails (2a, 2b) are inclined toward each other at an angle of inclination α to the base plane.

4. The movement device (1) as claimed in one of the preceding claims, **characterized in, that** the base joints (7) for supporting the rods (6) on the carriages (4, 5) for a common rail (2a, 2b) are arranged to be offset laterally at a different distance from the longitudinal axis of the rail (2a, 2b).

5. The movement device (1) as claimed in one of the preceding claims, **characterized in, that** at least one platform joint (8) of the rods (6) assigned to a common rail (2a, 2b) is arranged on a different plane from the other platform joints (8) on the movable platform (9).

6. The movement device (1) as claimed in one of the preceding claims, **characterized in, that** rods (6) can additionally have their lengths varied.

7. The movement device (1) as claimed in one of the preceding claims, **characterized in, that** exactly six rods (6) are provided.

8. The movement device (1) as claimed in one of the preceding claims, **characterized in, that** the platform (9) is provided to support a model (11) for a wind tunnel.

9. The movement device (1) as claimed in one of the preceding claims 1 to 8, **characterized in, that** the platform (9) is provided for a machine tool.

## Revendications

1. - Dispositif de déplacement (1) comportant une plateforme dite de Stewart, dans lequel une plateforme (9) mobile selon six degrés de liberté est reliée de façon articulée à une base (3) au moyen de bras (6) articulés à des articulations de plateforme (8), les bras (6) reposant de façon articulée sur des patins de glissement (4, 5) au moyen d'articulations de base (7) situées du côté de la base, les patins de glissement (4, 5) pouvant glisser sur des rails (2a, 2b) fixés sur la base (3) dans la direction longitudinale de chacun des rails (2a, 2b), les rails (2a, 2b) n'étendant parallèlement l'un à l'autre, chaque patin de glissement (4, 5) ayant son propre entraînement et les patins de glissement pouvant circuler sur les rails (4, 5) indépendamment l'un de l'autre, **caractérisé en ce qu'**exactement deux rails (2a, 2b) sont prévus, chacun des rails (2a, 2b) portant au moins trois patins de glissement (4, 5) et au moins six bras (6) sont prévus, chaque patin de glissement (4, 5) portant au moins l'un des bras (6).

2. - Dispositif de déplacement (1) selon la revendication 1, **caractérisé en ce qu'**au moins deux bras (6) associés à un rail commun (2a, 2b) se croisent spacialement.

3. - Dispositif de déplacement (1) selon l'une des revendications précédentes, **caractérisé en ce que** les rails (2a, 2b) sont inclinés par rapport au plan de la base selon un angle d'inclinaison α.

4. - Dispositif de déplacement (1) selon l'une des revendications précédentes, **caractérisé en ce que** les articulations de base (7) pour supporter les bras (6) sur les patins de glissement (4, 5), sont pour un rail commun (2a, 2b), décalés latéralement par rapport à l'axe longitudinal du rail (2a, 2b) selon une distance différente.

5. - Dispositif de déplacement (1) selon l'une des revendications précédentes, **caractérisé en ce qu'**au moins une articulation de plateforme (8) associée à un bras (6) d'un rail commun (2a, 2b) est disposée sur la plateforme mobile (9) sur un plan différent par rapport aux autres articulations de plateforme (8).

6. - Dispositif de déplacement (1) selon l'une des revendications précédentes, **caractérisé en ce que** les bras (6) ont en outre une longueur réglable.

7. - Dispositif de déplacement (1) selon l'une des revendications précédentes, **caractérisé en ce qu'**exactement six bras (6) sont prévus.

8. - Dispositif de déplacement (1) selon l'une des revendications précédentes, **caractérisé en ce que** la plateforme (9) est prévue pour porter un modèle (11) pour un tunnel de soufflerie.

9. - Dispositif de déplacement (1) selon l'une des revendications 1 à 8, **caractérisé en ce que** la plateforme (9) est prévue pour une machine-outil.
